(19) **Europäisches Patentamt**

**European Patent Office**

**Office européen des brevets**

(11) **EP 0 829 076 B1**

(12) **EUROPEAN PATENT SPECIFICATION**

(45) Date of publication and mention
of the grant of the patent:
**30.05.2001 Bulletin 2001/22**

(21) Application number: **97906851.7**

(22) Date of filing: **07.03.1997**

(51) Int Cl.$^7$: **G09F 9/30**

(86) International application number:
**PCT/JP97/00710**

(87) International publication number:
**WO 97/36276 (02.10.1997 Gazette 1997/42)**

(54) **OPTICAL IMAGE GUIDE SYSTEM**

OPTISCHES BILDLEITERSYSTEM

SYSTEME DE GUIDE IMAGE OPTIQUE

(84) Designated Contracting States:
**CH DE ES FR GB IT LI NL SE**

(30) Priority: **27.03.1996 JP 9587996**

(43) Date of publication of application:
**18.03.1998 Bulletin 1998/12**

(73) Proprietor: **Casio Computer Co., Ltd.
Shibuya-ku, Tokyo 151-8543 (JP)**

(72) Inventor: **HIGUCHI, Masaru
Akiruno-shi, Tokyo 197 (JP)**

(74) Representative: **Grünecker, Kinkeldey,
Stockmair & Schwanhäusser Anwaltssozietät
Maximilianstrasse 58
80538 München (DE)**

(56) References cited:
**EP-A- 0 614 163          JP-A- 2 294 684
US-A- 3 402 000          US-A- 4 139 261
US-A- 4 208 096**

# Description

Technical Field

The present invention relates to an optical image guide system for a display apparatus according to the preamble of claim 1, e.g., a liquid crystal display apparatus and, more particularly, to an optical image guide system for a display apparatus that can enlarge the image.

Background Art

In some display apparatuses, in order to enlarge or magnify images, a large number of optical fibers are arranged between a display comprising, e.g., a liquid crystal display panel, and a screen, and the distance among the end portions of the optical fibers is made larger on the screen side than that on the display side (for example, refer to Jpn. Pat. Appln. KOKAI Publication No. 2-294684). In this case, in the screen, a large number of through holes are formed in a screen plate, and a diffusion layer is formed on the surface of the screen plate. The exit surface-side end portions of the large number of optical fibers are inserted in the respective through holes of the screen plate from the lower surface side.

In a conventional display apparatus of this type, the exit surface-side end portions of the large number of optical fibers must be respectively inserted in the corresponding through holes of the screen plate one by one. This assembling operation takes much time and labor accordingly, leading to an increase in cost. Since the exit surface-side end portions of the optical fibers are inserted in the through holes of the screen plate manually, the optical fibers must be formed long to a certain degree, leading to an increase in size of the entire apparatus.

Optical image guide systems having the features of the preamble of claim 1 are known from US 3,402,000 or US 4,139,261.

In view of the foregoing, there is a need and it is the object of the present invention to provide an optical image guide system in which the assembling operation can be performed easily and the entire apparatus can be made compact, wherein an improved image quality involved is achieved.

This object is solved by the optical image guide system having the features of claim 1. Preferred embodiments are disclosed in dependent claims.

According to the optical image guide system of the present invention, the image is enlarged in one predetermined direction in accordance with the angle of inclination of the exit surface of the optical guide with respect to the incident surface. For example, if the angle of inclination of the exit surface of the optical guide with respect to the incident surface is about 60° to about 84.3°, the image can be enlarged 2 to 10 times in the predetermined direction. Since the optical guide has a large number of linear optical guide lines that are arranged densely, when assembling the apparatus, it suffices to incorporate this optical guide, thus facilitating the assembling operation. Since the exit surface of the optical guide is an inclined surface which is inclined with respect to the incident surface, the shape of the side surface of the optical guide can be formed as, e.g., a right-angled triangle. Since the incident surface of the optical guide need only be arranged on the image display surface side of the display, when the exit surface of the optical guide is vertical, the depth of the optical guide can be set to almost equal to the depth of the display, leading to a reduction in size of the entire apparatus.

Brief Description of Drawings

FIG. 1 is a partially cutaway side view showing the main part of a display apparatus according to the first embodiment of the present invention;

FIG. 2 is an equivalent circuit diagram of one of the transparent substrates of a liquid crystal display panel shown in FIG. 1;

FIG. 3 is a perspective view showing an optical fiber originally prepared for formation of an optical guide shown in FIG. 1;

FIG. 4 is a perspective view showing a forming step subsequent to FIG. 3, in which an optical fiber bundle is formed;

FIG. 5 is a perspective view showing a forming step subsequent to FIG. 4, in which a plurality of optical fiber bundles are accommodated in a lower die;

FIG. 6A is a perspective view showing a forming step subsequent to FIG. 5, in which an optical fiber block is formed;

FIG. 6B is a plan view of part of the optical fiber block shown in FIG. 6A;

FIG. 7 is a longitudinally sectional side view of part of the optical guide and a refractor shown in FIG. 1;

FIG. 8 is a view for explaining an example of a method of forming the refractor shown in FIG. 7;

FIG. 9 is a view for explaining an angle θ2 between the reflecting surface of the refractor shown in FIG. 7 and the incident surface;

FIG. 10 is a view for explaining how image light reflected by the reflecting surface of the refractor shown in FIG. 7 is enlarged in one predetermined direction;

FIG. 11 is a view for explaining the characteristics of the core of the optical guide;

FIG. 12 is a longitudinally sectional side view, similar to FIG. 7, of a display apparatus according to a first example for better understanding the present invention;

FIG. 13 is a view for explaining an example of a method of forming a refractor shown in FIG. 12;

FIG. 14 is a view for explaining an angle θ3 between the second reflecting surface of the refractor shown in FIG. 12 and the incident surface;

FIG. 15 is a longitudinally sectional side view, similar to FIG. 7, of a display apparatus according to a second example for better understanding the present invention;

FIG. 16 is a side view of the main part of a display apparatus according to a third example for better understanding the present invention;

FIG. 17 is a side view of the main part of a display apparatus according to a fourth example for better understanding the present invention;

FIG. 18 is a perspective view of the main part of a display apparatus according to a fifth example for better understanding the present invention;

FIG. 19 is a perspective view of the main part of a display apparatus according to a sixth example for better understanding the present invention;

FIG. 20 is a view for explaining how an image is enlarged in the display apparatus shown in FIG. 19;

FIG. 21 is a side view of the main part of a display apparatus according to a seventh example for better understanding the present invention;

FIG. 22 is a side view of the main part of a display apparatus according to an eighth example for better understanding the present invention;

FIG. 23 is a side view of the main part of a display apparatus according to a ninth example for better understanding the present invention, the part of which is enclosed in a circular line is enlargely shown;

FIG. 24 is a view for explaining how an image is enlarged in the display apparatus shown in FIG. 23; and

FIG. 25 is a side view of the main part of a display apparatus according to a tenth example for better understanding the present invention.

Best Mode of Carrying Out the Invention

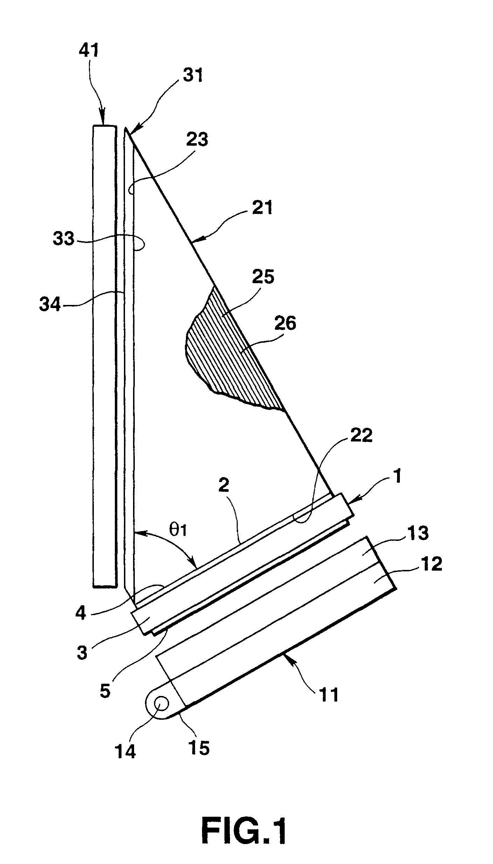

FIG. 1 is a partially cutaway side view showing the main part of a display apparatus according to the first embodiment of the present invention. This display apparatus has a liquid crystal display panel (display) 1. The liquid crystal display panel 1 is inclined against a horizontal plane by a predetermined angle with its image display surface 2 located on the upper side. A backlight unit 11 is arranged on the lower surface side of the liquid crystal display panel 1 to be parallel to the liquid crystal display panel 1. An optical guide 21 is arranged on the image display surface 2 side of the liquid crystal display panel 1 such that its incident surface 22 opposes the display surface 2. The optical guide 21 has a right-angled triangle having an exit surface 23 which is inclined with respect to the incident surface 22 by a predetermined angle θ1. In this case, the exit surface 23 of the optical guide 21 extends vertically. A refractor 31 and a diffusion plate (screen) 41 are sequentially arranged on the exit surface 23 side of the optical guide 21.

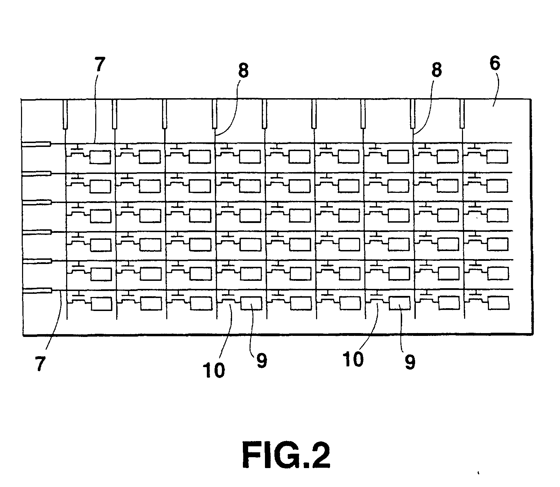

In the liquid crystal display panel 1, polarizing plates 4 and 5 are adhered to the upper and lower surfaces, respectively, of a liquid crystal cell 3. The liquid crystal display panel 1 is an active matrix type color liquid crystal display panel having thin film transistors as switching elements, but is slightly different from an ordinary liquid crystal display panel. More specifically, one of transparent substrates where the thin film transistors and the like are formed of the liquid crystal cell 3 of the liquid crystal display panel 1 has a structure as shown by the equivalent circuit diagram in FIG. 2. Gate lines 7 and data lines 8 are arranged in a matrix on the upper surface of this one transparent substrate 6, and near the intersections of the gate and data lines 7 and 8, pixel electrodes 9 are connected to the lines 7 and 8 through thin film transistors 10. While the distance among the gate lines 7 is equal to that of the ordinary liquid crystal display panel, the distance among the data lines 8 is larger than that of the ordinary liquid crystal display panel. For example, the enlargement factor of the distance between the adjacent data lines 8 is 2 to 10 times that of the ordinary liquid crystal display panel. Accordingly, regarding the size of each pixel electrode 9, its length in the vertical direction along the data lines 8 is equal to that of the ordinary liquid crystal display panel, while its length in the horizontal direction along the gate lines 7 is 2 to 10 times that of the ordinary liquid crystal display panel. Therefore, as will be described later, when image light emerging from the image display surface 2 of the liquid crystal display panel 1 is enlarged 2 to 10 times in one predetermined direction, i.e., in the direction of the data lines 8, a 2x to 10x image of an image obtained with the ordinary liquid crystal display panel can be obtained.

The backlight unit 11 shown in FIG. 1 will be described. The backlight unit 11 includes an optical guide 12 serving as a surface light source, a collimating optical guide 13, a fluorescent tube 14, and a reflecting film 15. The collimating optical guide 13 is arranged on the upper surface of the optical guide 12. The fluorescent tube 14 and the reflecting film 15 are arranged on one predetermined end side of the optical guide 12. Of these components, the optical guide 12 comprises a transparent member made of, e.g., an acrylic resin. Light incident on the optical guide 12 through its one predetermined end face is guided into the optical guide 12, and the guided light is totally reflected by the lower surface of the optical guide 12 and is output from the entire upper surface of the optical guide 12, so that the optical guide 12 serves as a surface light source. The collimating optical guide 13 comprises a collimation lens array, an optical fiber array, or the like. Light reaching the lower surface of the collimating optical guide 13 is output from its upper surface as parallel light perpendicular to the upper surface. Light emitted by the fluorescent tube 14 and reflected by the reflecting film 15 enters one predetermined end face of the optical guide 12 to form a surface light source. The light as the surface light source is collimated by the collimating optical guide 13 into parallel light perpendicular to the lower surface of the liquid crystal display panel 1. Then, this parallel light is irradiated onto the lower surface of the liquid crystal display panel 1.

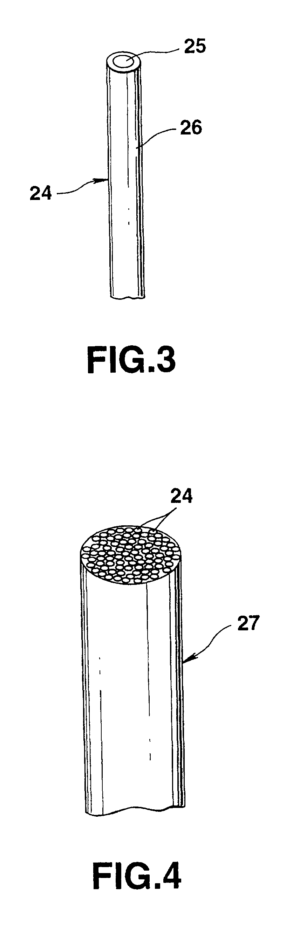

The optical guide 21 shown in FIG. 1 will be described, together with its forming method, with reference to FIGS. 3 to 6 sequentially. A large number of optical fibers 24 one of which is shown in FIG. 3, each having a predetermined length, are prepared. Each optical fiber 24 is obtained by coating a core 25 made of a high-refractive acrylic resin with a cladding layer 26 made of a low-refractive fluoroplastic. In this case, for example, the diameter of the core 25 is about 10 µm to 60 µm, and the thickness of the cladding layer 26 is about 5 µm to 20 µm. As shown in FIG. 4, for example, about 1,500 to 2,500 optical fibers 24 are bundled to form an optical fiber bundle 27 having a diameter of about 6 mm to 10 mm.

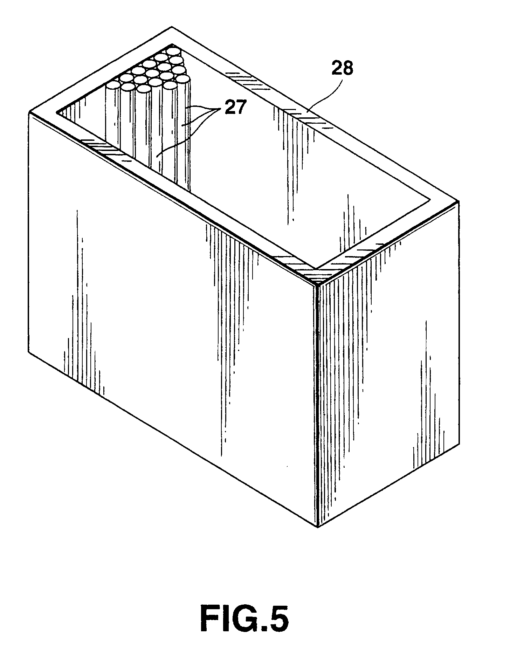

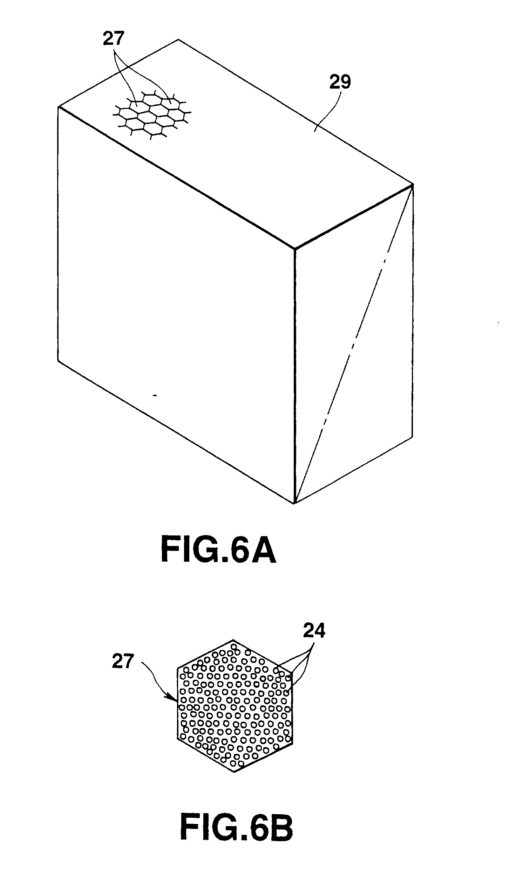

A plurality of optical fiber bundles 27 are crowded in a lower die 28 having a rectangular parallelepiped inner portion, as shown in FIG. 5. The interior of the lower die 28 is tightly sealed with an upper die (not shown), and the resultant structure is heated. As a result, the cladding layers 26 of the optical fibers 24 fuse and expand to fill the space among the plurality of optical fiber bundles 27. The large number of cores 25 are bonded with each other through the cladding layers 26 to fill the lower die 28 and the upper die. As a result, a rectangular parallelepiped optical fiber block 29 as shown in FIG. 6A is obtained. In this case, the respective optical fiber bundles 27 push each other in the optical fiber block 29 except for those in the outer periphery in the dies, so that each handle forms a regular hexagon when seen from above, as shown in FIG. 6B. Alternately, before tightly sealing the interior of the lower die 28 with the upper die, the space among the plurality of optical fiber bundles 27 may be filled with a material which is the same as or different from that of the cladding layers 26. Subsequently, the optical fiber block 29 is cut along a diagonal on its predetermined side surface (a surface making the angle θ1 with the upper surface), as indicated by a one dot-dash line in FIG. 6A, to obtain two optical guides 21 each having a right-angled triangular side surface, as shown in FIG. 1. In each optical guide 21 obtained in this manner, the large number of cores (linear optical guide lines) 25 are arranged densely, the cores 25 are coated with the cladding layers 26 and are bonded with each other through the cladding layers, and its exit surface 23 forms an inclined surface inclined with respect to its incident surface 22 by the predetermined angle θ1.

The incident surface 22 of the optical guide 21 is in tight contact with or close to the image display surface 2 of the liquid crystal display panel 1. In this case, the size of the incident surface 22 of the optical guide 21 is set to be equal to or slightly larger than the size of the image display surface 2 of the liquid crystal display panel 1. If the angle θ1 formed by the incident surface 22 and exit surface 23 of the optical guide 21 is about 60° to about 84.3°, the length of the exit surface 23 is 2 to 10 times that of the incident surface 22 on the side surface of the optical guide 21. According to another forming method of the optical guide 21, in place of the optical fibers 24 as shown in FIG. 3, optical fibers 24 several times longer than them may be prepared to form a thin, elongated optical fiber block 29, and this optical fiber block 29 may be cut into segments each having a predetermined length, thereby obtaining a plurality of optical fiber blocks 29 identical to that shown in FIG. 6A. Alternatively, cores 25 may be formed by extrusion molding. A bundle of about 1,500 to 2,500 cores 25 may be passed through a tank containing a fused cladding layer material. The cladding layer material attaching to the cores 25 may then be allowed to solidify to obtain an optical fiber bundle 27 identical to that shown in FIG. 4.

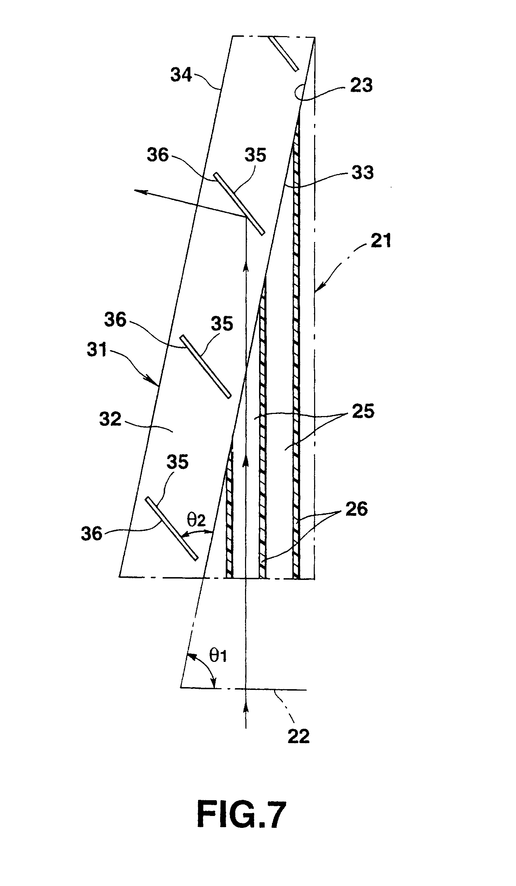

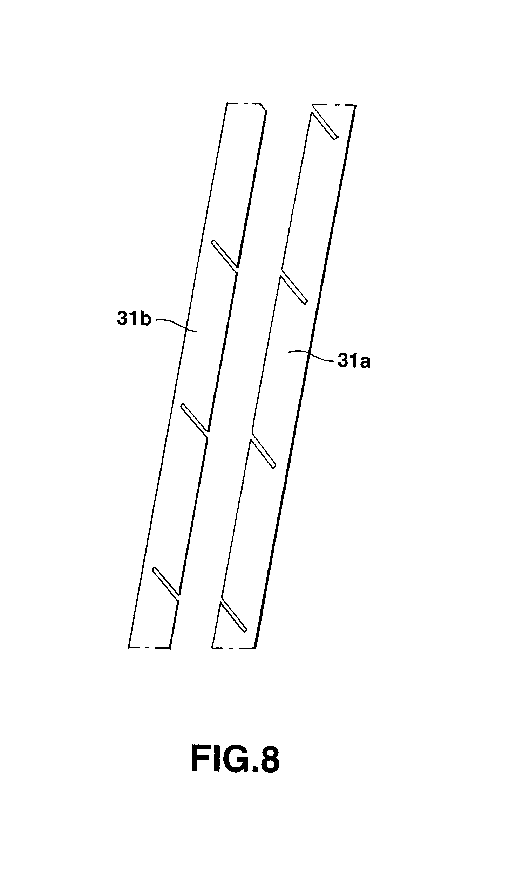

The refractor 31 shown in FIG. 1 will be described with reference to FIG. 7. The refractor 31 has a flat plate-like refractor body 32 formed with the same material as that of the cores 25 of the optical guide 21 or a material having a refractive index close to that of the cores 25. One surface of the refractor body 32 serves as an incident surface 33, while the other surface thereof serves as an exit surface 34 parallel to the incident surface 33. A plurality of plate-like refracting layers 35 inclined with respect to the incident surface 33 by a predetermined angle θ2 (this angle θ2 will be described later) are formed in the refractor body 32 at a predetermined pitch of arrangement. The refracting layers 35 are made of air or the like having a refractive index largely different from that of the refractor body 32. The two end portions of each refracting layer 35 in the widthwise direction (the two end portions in the direction of thickness of the refractor body 32) are closed, while the two end portions thereof in the longitudinal direction are open to the atmosphere. As the refractive index of the refracting layers 35 is largely different from that of the material (e. g., an acrylic resin) of the refractor body 32, predetermined interfaces between the refracting layers 35 and the refractor body 32 serve as reflecting surfaces (refracting surfaces) 36. The pitch of arrangement of the refracting layers 35 is the same as that of the cores 25 at the exit surface 23 of the optical guide 21. The incident surface 33 of the refractor 31 is adhered to the exit surface 23 of the optical guide 21 with an adhesive (not shown) made of, for example, an acrylic resin. In this state, the exit surface 34 of the refractor 31 is parallel to the exit surface 23 of the optical guide 21. The refractor 31 may be formed by monolithic molding. Alternatively, as shown in FIG. 8, refractor halves 31a and 31b may be molded to have a shape identical to that obtained by dividing the refractor 31 in the direction of thickness, and these refractor halves 31a and 31b may be adhered to each other with an adhesive (not shown) made of an acrylic resin. Alternatively, a refractor half 31a or 31b may be formed to have a thickness twice that of the above-described refractor half 31a or 31b, and a refractor 31 may be formed with only the refractor half 31a or 31b.

The reason of forming the refractor body 32 of the refractor 31 with the same material as that of the cores 25 of the optical guide 21 or the material having the refractive index close to that of the cores 25 will be described. As the acrylic resin is employed as the material of the cores 25, if the angle θ1 formed by the incident surface 22 and the exit surface 23 of the optical guide 21 is about 47° or more, light perpendicularly incoming on the incident surface 22 of the optical guide 21 is totally reflected by the exit surface 23 of the optical guide 21. When the refractor body 32 of the refractor 31 is made of, e.g., an acrylic resin, and the incident surface 33 of the refractor 31 is adhered to the exit surface 23 of the optical guide 21 with the adhesive made of an acrylic resin, even if the angle θ1 formed by the incident surface 22 and the exit surface 23 of the optical guide 21 is about 47° or more, light perpendicularly incoming on the incident surface 22 of the optical guide 21 is not totally reflected by the exit surface 23 of the optical guide 21 but travels straight to enter the incident surface 33 of the refractor 31.

The diffusion plate 41 shown in FIG. 1 will be described. The diffusion plate 41 is obtained by densely forming a large number of very small lens portions (not shown) on the entire portion of one surface of a resin sheet having substantially the same size as that of the exit surface 34 of the refractor 31. Although in FIG. 1 the diffusion plate 41 is arranged at a predetermined gap with respect to the exit surface 34 of the refractor 31 to be parallel to it, it may be arranged in tight contact with the exit surface 34 of the refractor 31.

Enlarged image display by means of this display apparatus will be described with reference to FIG. 1. When parallel light perpendicular to the lower surface of the liquid crystal display panel 1 emerges from the upper surface of the collimating optical guide 13 of the backlight unit 11, image light in accordance with image driving of the liquid crystal display panel 1 emerges from the image display surface 2 of the liquid crystal display panel 1 and is perpendicularly incident on the incident surface 22 of the optical guide 21. The incident image light travels straight in the respective cores 25 of the optical guide 21 along the core central axes, directly emerges from the exit surface 23 of the optical guide 21, and directly becomes incident on the incident surface 33 of the refractor 31. The incident image light is reflected (refracted) by the reflecting surfaces 36 of the refractor 31, to become image light perpendicular to the exit surface 34 of the refractor 31 (i.e., the exit surface 23 of the optical guide 21), as will be described later, and is enlarged in one predetermined direction. The enlarged image light emerges from the exit surface 34 of the refractor 31 in a direction perpendicular to the exit surface 34. The emerging image light is transmitted through the diffusion plate 41 shown in FIG. 1 and is diffused by the small lens portions of the diffusion plate 41. The diffused image light is visually observed.

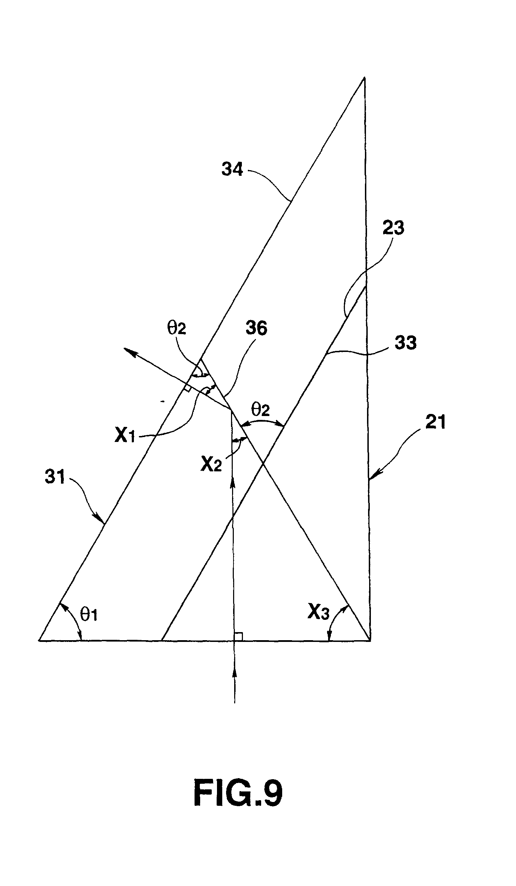

How the image light reflected by the reflecting surfaces 36 of the refractor 31 becomes image light perpendicular to the exit surface 34 of the refractor 31 will be described with reference to FIG. 9. Assume that an image light beam reflected by the reflecting surface 36 of the refractor 31 becomes an image light beam perpendicular to the exit surface 34 of the refractor 31, as indicated by arrows in FIG. 9. An angle x1 formed by the reflecting surface 36 and the image light beam reflected by the reflecting surface 36 is expressed by the following equation (1):

$$x1 = 90 - \theta2 \tag{1}$$

Similarly, an angle x2 formed by the reflecting surface 36 and the image light beam incident on the reflecting surface 36 is given by the following equation (2):

$$x2 = 90 - x3 \tag{2}$$

In this case, a substitution of 180 - θ1 - θ2 for x3 in equation (2) yields x2:

$$x2 = \theta1 + \theta2 - 90 \tag{3}$$

Since x1 equals x2, from equations (1) and (3) we have:

$$\theta2 = 90 - \theta1/2 \tag{4}$$

Therefore, if the angle θ2 formed by the incident surface 33 and the reflecting surface 36 of the refractor 31 is θ2 = 90 - θ1/2, the image light beam reflected by the reflecting surface 36 of the refractor 31 can become an image light beam perpendicular to the exit surface 34 of the refractor 31.

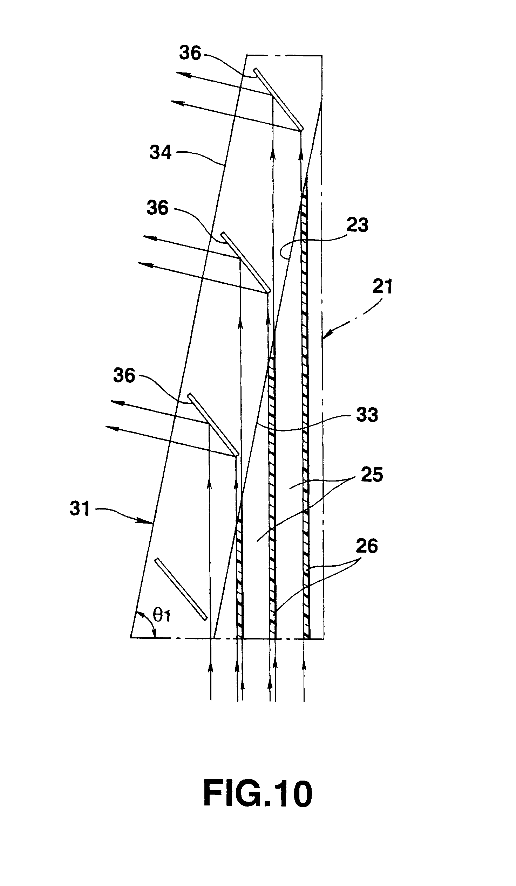

Enlargement of image light reflected by the reflecting surfaces 36 of the refractor 31 in one predetermined direction will be described with reference to FIG. 10. As indicated by arrows in FIG. 10, image light beams traveling straight in the respective cores 25 of the optical guide 21 along the core central axes are reflected by the reflecting surfaces 36 of the refractor 31 to become image light beams perpendicular to the exit surface 34 of the refractor 31. In this case, assuming that the image light beam emerging from the exit surface 23 of one core 25 is entirely reflected by one reflecting surface 36, the size of the image light beam emerging from the exit surface 34 of the refractor 31 with respect to one core 25 becomes equal to the sectional size of one core 25 perpendicular to the central axis of this core 25. However, while the large number of cores 25 are arranged densely, image light beams emerging from the exit surface 34 of the refractor 31 and respectively corresponding to the cores 25 are separated from each other in accordance with the pitch of arrangement of the reflecting surfaces 36 of the refractor 31 in the direction of arrangement of the reflecting surfaces. This separation factor is expressed by the length of the exit surface 23 with respect to the length of the incident surface 22 on the side surface of the optical guide 21. Hence, as described above, if the angle $\theta 1$ formed by the incident surface 22 and the exit surface 23 of the optical guide 21 is about 60° to about 84.3°, the length of the exit surface 23 is 2 to 10 times that of the incident surface 22 on the side surface of the optical guide 21, and the separation factor in this case becomes 2 to 10 times accordingly. As a result, image light emerging from the image display surface 2 of the liquid crystal display panel 1 is enlarged 2 to 10 times in the direction of arrangement of the reflecting surfaces 36 of the refractor 31, and a 2x to 10x image of an image obtained with an ordinary liquid crystal display panel can thus be obtained. In FIG. 10, $\theta 1$ is about 78.5°. In this case, a 5x image of the image on the incident surface is obtained on the exit surface.

Assuming that the size of each pixel electrode 9 shown in FIG. 2 along the data line 8 is about 100 μm, since the diameter of each core 25 of the optical guide 21 is about 10 μm to 60 μm, image light corresponding to one pixel electrode 9 is guided by several cores 25 or more. The image light enlarged 2 to 10 times in the direction of arrangement of the reflecting surfaces 36 in the refractor 31 forms bright spots separated from each other on the exit surface 34 of the image display surface 2. However, since these bright spots are diffused by the diffusion plate 41, they can be visually observed with good contrast throughout a wide angle of view.

In this display apparatus, the optical guide 21 is formed by densely arranging a large number of cores 25. Therefore, in assembly of the display liquid crystal display panel 1, it suffices to incorporate the optical guide 21, thus facilitating the assembling operation. The incident surface 22 of the columnar optical guide 21 having a right-angled side surface need only be arranged on the image display surface 2 side of the liquid crystal display panel 1. Thus, if the exit surface 23 of the optical guide 21 is set vertically, the depth of the optical guide 21 portion can be set to almost equal to the depth of the liquid crystal display panel 1, leading to a reduction in size of the entire apparatus. In addition, in this case, the depth of the liquid crystal display panel 1 substantially coincides with the direction of the data lines 8 shown in FIG. 2, and the size of the pixel electrodes 9 in this direction is equal to that of the ordinary liquid crystal display panel. Therefore, the depth of the liquid crystal display panel 1 of this display apparatus can be prevented from increasing.

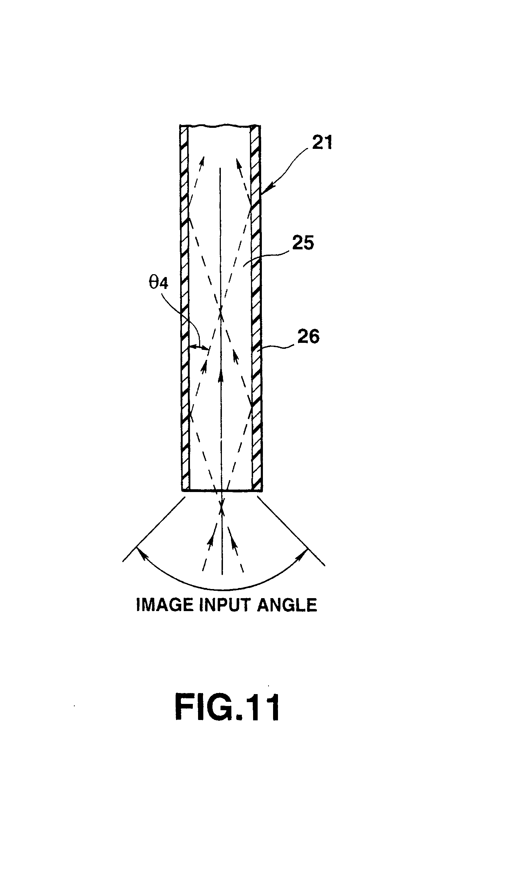

If the backlight unit 11 does not have the collimating optical guide 13, image light emerging from the image display surface 2 of the liquid crystal display panel 1 becomes scattered light. As shown in FIG. 11, even if the image input angle to each core 25 of the optical guide 21 is small, an image light beam that propagates through the core 25 while repeating total reflection is generated, as indicated by broken lines, in addition to an image light beam that travels straight in the core 25 along its central axis, as indicated by a solid line. Concerning the former image light beam that propagates in the core 25 while repeating total reflection, even if it is reflected by the corresponding reflecting surface 36 of the refractor 31 shown in FIG. 7, it cannot form an image light beam perpendicular to the exit surface 34 of the refractor 31. As a result, when seen from the front surface of the diffusion plate 41, the brightness lowers.

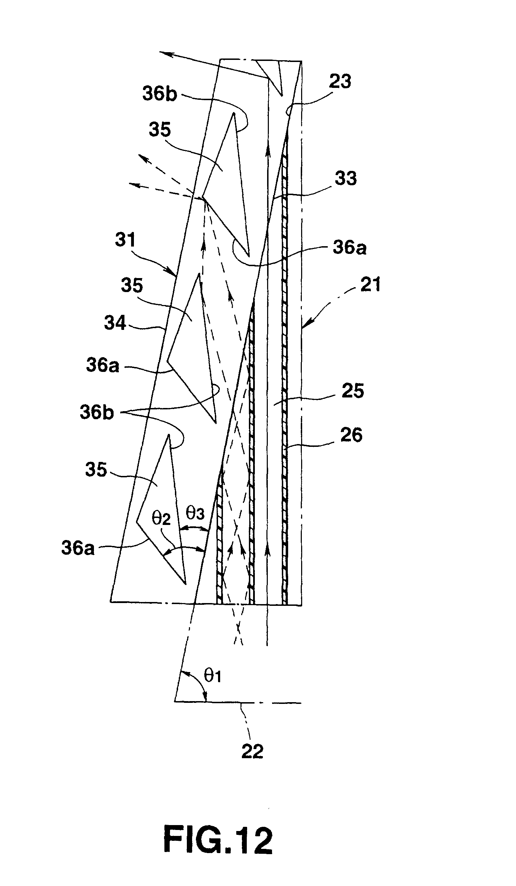

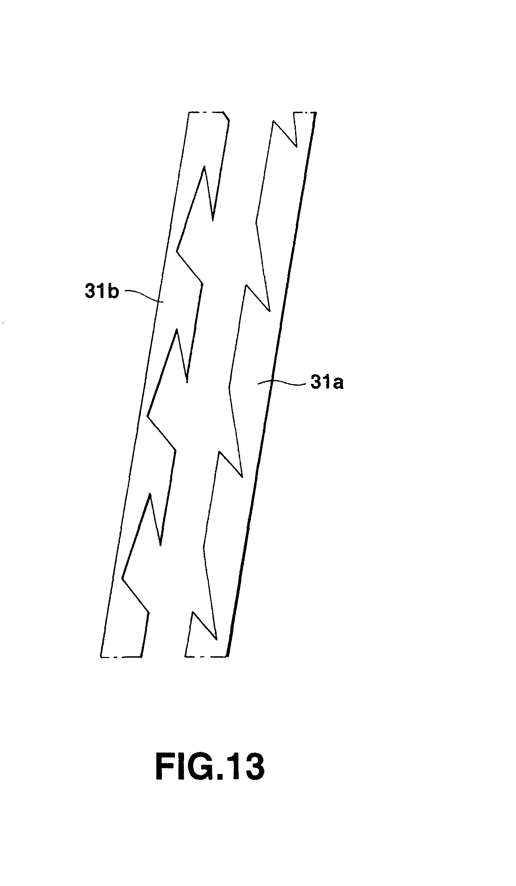

The first example that can increase the brightness of the diffusion plate 41 when seen from the front surface will be described with reference to FIG. 12. Note that in FIG. 12 $\theta 1 = 78.5°$. A refractor 31 of this display apparatus has refracting layers 35 each having a predetermined triangular prismatic shape. Each refracting layer 35 has a first reflecting surface 36a inclined with respect to an incident surface 33 by the same angle $\theta 2$ as that of the reflecting surfaces 36 shown in FIG. 7, and a second reflecting surface 36b inclined with respect to the incident surface 33 by a predetermined angle $\theta 3$ (this angle $\theta 3$ will be described later). The refractor 31 may be formed by monolithic molding, in the same manner as in the first embodiment described above. Alternatively, as shown in FIG. 13, refractor halves 31a and 31b may be molded to have a shape identical to that obtained by dividing the refractor 31 in the direction of thickness, and these refractor halves 31a and 31b may be adhered to each other with an adhesive (not shown) made of an acrylic resin. Part of image light propagating in each core 25 of the optical guide 21 while repeating total reflection, as indicated by broken lines in FIG. 12, is reflected by the second reflecting surface 36b comprising the interface between the refractor 31 and the corresponding lower refracting layer 35 of the refractor 31, and is reflected by the first reflecting surface 36a comprising the interface between the refractor 31 and the corresponding upper refracting layer 35 of the refractor 31, to become image light perpendicular to the exit surface 34 of the refractor 31 (i.e., the exit surface 23 of the optical guide 21), as will be described later. This image light emerges from the exit surface 34 of the refractor 31 in a direction perpendicular to the exit surface 34.

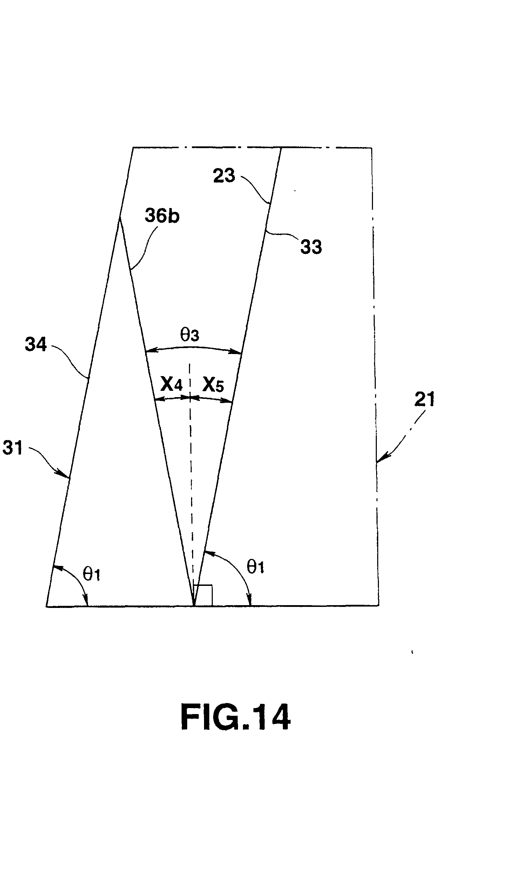

The angle $\theta 3$ will be described. Assume that the maximum total reflection angle of image light that propagates in the core 25 of the optical guide 21, as indicated by broken lines in FIG. 11, while repeating total reflection is defined as $\theta 4$. The maximum total reflection angle $\theta 4$ is determined by the materials of the core 25 and the cladding layer 26. As shown in FIG. 12, image light which is reflected by the second reflecting surface 36b of each lower refracting layer 35 of the refractor 31 and thereafter reflected by the first reflecting surface 36a of its upper refracting layer 35 becomes image light perpendicular to the exit surface 34 of the refractor 31. In other words, image light which is reflected by the second reflecting surface 36b of each lower refracting layer 35 of the refractor 31 and is thereafter incident on the first reflecting surface 36a of its upper refracting layer 35 of the refractor 31 becomes light parallel to the central axis of the core 25 of the optical guide 21. More specifically, an angle x4 (see FIG. 14) formed by the second reflecting surface 36b of each lower refracting layer 35 of the refractor 31 and the light parallel to the central axis of the core 25 is half the maxim total reflection angle $\theta 4$ of the core 25 of the optical guide 21, and is expressed by the following equation (5) :

$$x4 = \theta 4/2 \qquad (5)$$

An angle x5 (see FIG. 14) formed by the image light which is reflected by the second reflecting surface 36b of each lower refracting layer 35 of the refractor 31 and is incident on the first reflecting surface 36a of its upper refracting layer 35 of the refractor 31, and the incident surface 33 of the refractor 31 is:

$$x5 = 90 - \theta 1 \qquad (6)$$

In this case, since $\theta 3$ is the sum of x4 and x5, as shown in FIG. 14, from equations (5) and (6) we have:

$$\theta 3 = 90 - \theta 1 + \theta 4/2 \qquad (7)$$

Accordingly, assuming that the angle $\theta 3$ formed by the incident surface 33 of the refractor 31 and the second reflecting surface 36b is defined to satisfy $\theta 3 = (90 - \theta 1 + \theta 4/2)$, part of the image light propagating in the core 25 of the optical guide 21 while repeating total reflection, as indicated by the arrows of broken lines in FIG. 12, can form image light perpendicular to the exit surface 34 of the refractor 31. As a result, the brightness of the diffusion plate 41 when seen from the front surface can be increased.

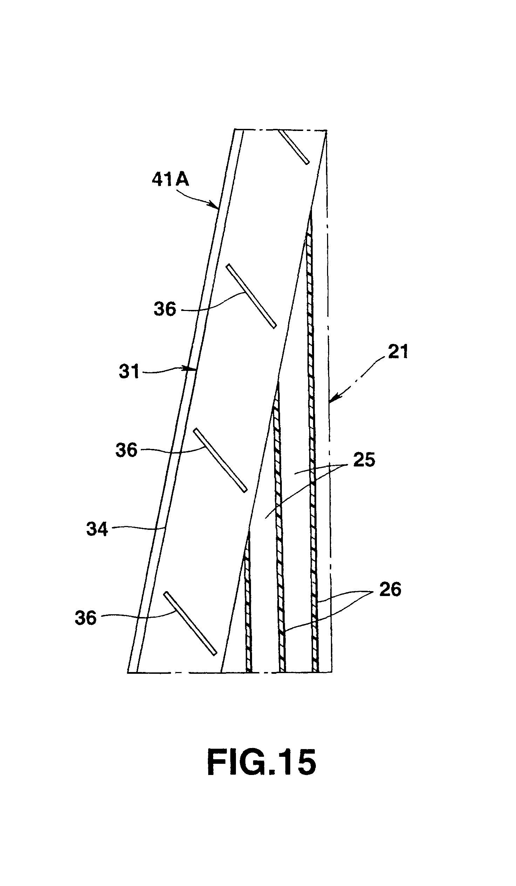

In the above embodiment and example, the diffusion plate 41 is used, as shown in, e.g., FIG. 1. However, the present invention is not limited to this. For example, as indicated by the second example shown in FIG. 15, a diffusion layer 41A made of very small lens portions may be directly, integrally formed on the entire portion of an exit surface 34 of a refractor 31.

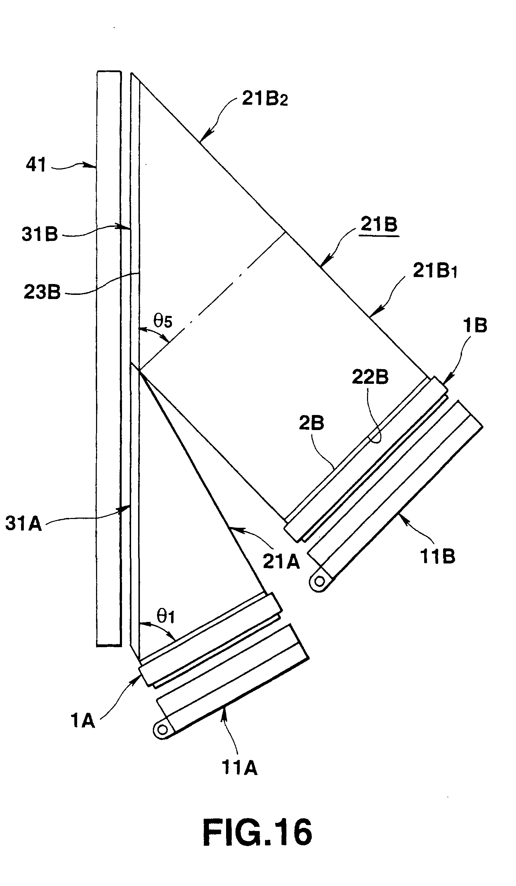

FIG. 16 is a side view of the main part of a display apparatus according to the third example. In this display apparatus, one enlarged image is displayed on one diffusion plate 41 by two liquid crystal display panels 1A and 1B, i.e., by the first liquid crystal display panel 1A arranged to be inclined with respect to the horizontal plane by 30° and the second liquid crystal display panel 1B arranged at an obliquely upper right portion of the first liquid crystal display panel 1A to be inclined with respect to the horizontal surface by 45°. In this case, the second liquid crystal display panel 1B is inclined with respect to the horizontal plane by 45° in order to obtain a space for this second liquid crystal display panel 1B and a second backlight unit 11B on the lower surface side of the second liquid crystal display panel 1B. The size of the second liquid crystal display panel 1B, including its pixel electrodes 9 in the direction of data lines 8 corresponding to those shown in, e.g., FIG. 2, is 2 times the size of the first liquid crystal display panel 1A including its pixel electrodes 9 in the same direction. Accordingly, the second backlight unit 11B is also larger than a first backlight unit 11A by a predetermined amount.

The sizes of the first and second refractors 31A and 31B are almost equal to each other. Accordingly, although a first optical guide 21A has a right-angled triangular side surface, a second optical guide 21B consists of an optical guide portion 21B1 with a square side surface, which has an incident surface 22B of almost the same size as that of an image display surface 2B of the second liquid crystal display panel 1B, and an optical guide portion 21B2 with a right-angled triangular side surface, which has an exit surface 23B of almost the same size as that of the second refractor 31B. The upper end portion of the first refractor 31A and the lower end portion of the second refractor 31B are in tight contact with each other. This aims at preventing the gap between the two liquid crystal display panels 1A and 1B and the non-display regions of the respective liquid crystal display panels 1A and 1B from being seen on the diffusion plate 41 that displays image light emerging from the refractors 31A and 31B.

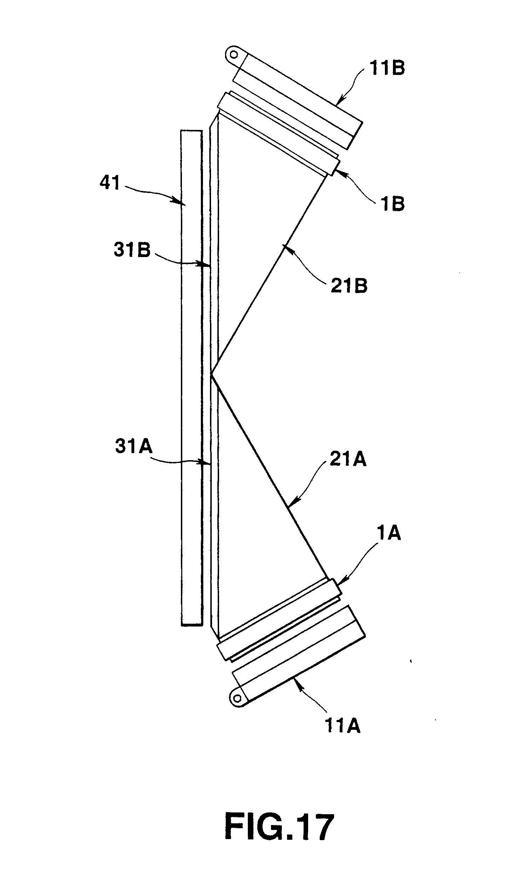

In the example shown in FIG. 16, since an angle $\theta 1$ formed by the incident and exit surfaces of the first optical guide 21A is 60°, the image on the first liquid crystal display panel 1A is enlarged twice in the vertical direction. Meanwhile, since an angle $\theta 5$ formed by the incident and exit surfaces of the second optical guide 21B is 45°, the image on the second liquid crystal display panel 1B is enlarged $\sqrt{2}$ times in the vertical direction. As described above, the size of the second liquid crystal display panel 1B including its pixel electrodes 9 in the direction of the data lines 8 shown in, e.g., FIG. 2, is $\sqrt{2}$ times that of the first liquid crystal display panel 1A including its pixel electrodes 9 in the same direction. Therefore, an image obtained by enlarging the image on the second liquid crystal display panel 1B $\sqrt{2}$ times in the vertical direction has the same size as that of the image obtained by enlarging the image on the first liquid crystal display panel 1A twice in the vertical direction. As a result, one enlarged image is displayed on one diffusion plate 41 by the first and second liquid crystal display panels 1A and 1B. As shown in the fourth example shown in FIG. 17, first and second liquid crystal display panels 1A and 1B and the like may be arranged symmetrically in the vertical direction.

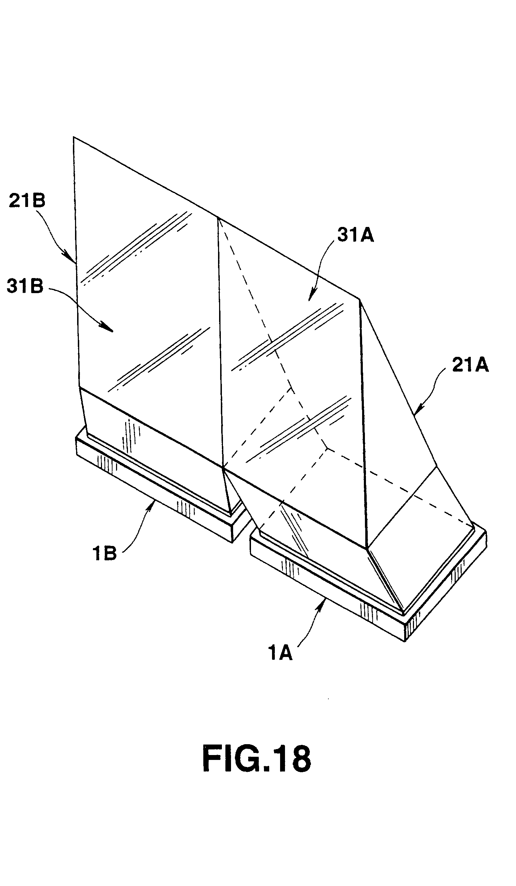

FIG. 18 is a perspective view of the main part of a display apparatus according to the fifth example.

In this display apparatus, one enlarged image is displayed on one diffusion plate (not shown) by first and second liquid crystal display panels 1A and 1B that are arranged symmetrically in the horizontal direction to be inclined with respect to the horizontal surface by 30°. In this case, in order to obtain a space for arranging the first and second liquid crystal display panels 1A and 1B and first and second backlight units (not shown), the lower portions of first and second optical guides 21A and 21B are inclined in a direction to separate from each other. The first and second first optical guides 21A and 21B are in tight contact with each other, and first and second refractors 31A and 31B are also in tight contact with each other, so that the gap between the two liquid crystal display panels 1A and 1B and the like may not be seen on the diffusion plate. FIG. 17 is a side view. If FIG. 17 is a plan view, the first and second liquid crystal display panels 1A and 1B may be arranged symmetrically while they are vertical. In order to obtain a larger image surface, for example, the first and second liquid crystal display panels 1A and 1B and the like shown in the side surface of FIG. 17 may be arranged symmetrically in the horizontal direction. If FIG. 17 is a plan view, the first and second liquid crystal display panels 1A and 1B and the like may be arranged symmetrically in the vertical direction.

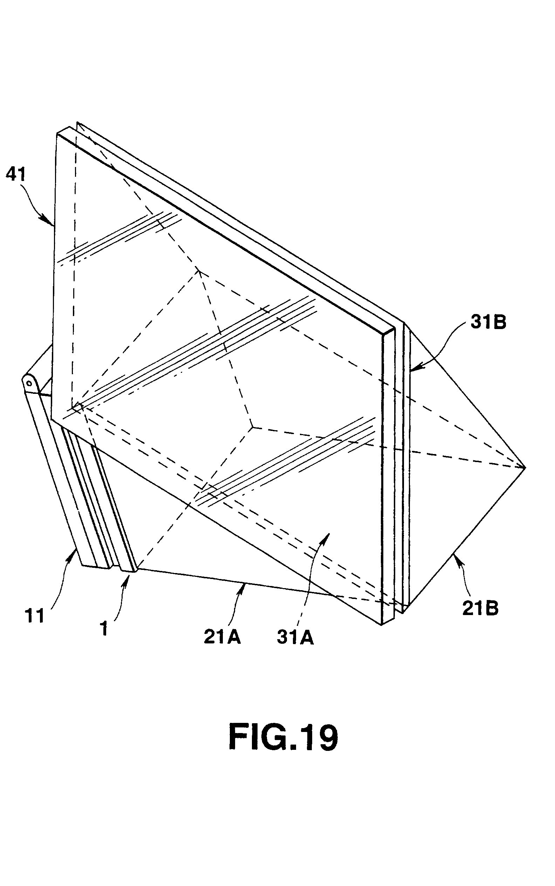

FIG. 19 is a perspective view showing the main part of a display apparatus according to the sixth example. In this display apparatus, a backlight unit 11 is arranged on the image non-display surface side of a liquid crystal display panel 1, a first optical guide 21A is arranged on the image display surface side of the liquid crystal display panel 1, a first refractor 31A is arranged on the exit surface side of the first optical guide 21A, a second optical guide 21B is arranged on the exit surface side of the first refractor 31A, a second refractor 31B is arranged on the exit surface side of the second optical guide 21B, and a diffusion plate 41 is arranged on the exit surface side of the second refractor 31B. The diffusion plate 41 is vertical. In this case, image light emerging from the image display surface of the liquid crystal display panel 1 is enlarged in one predetermined direction by the first optical guide 21A and the first refractor 31A. The enlarged image light is perpendicularly incident on the incident surface of the second optical guide 21B. The incident image light is enlarged in a direction perpendicular to the above-described predetermined direction by the second optical guide 21B and the second refractor 31B. The enlarged image light emerges from the exit surface of the second refractor 31B in a direction perpendicular to this exit surface. The image light from the exit surface of the second refractor 31B is diffused by the diffusion plate 41.

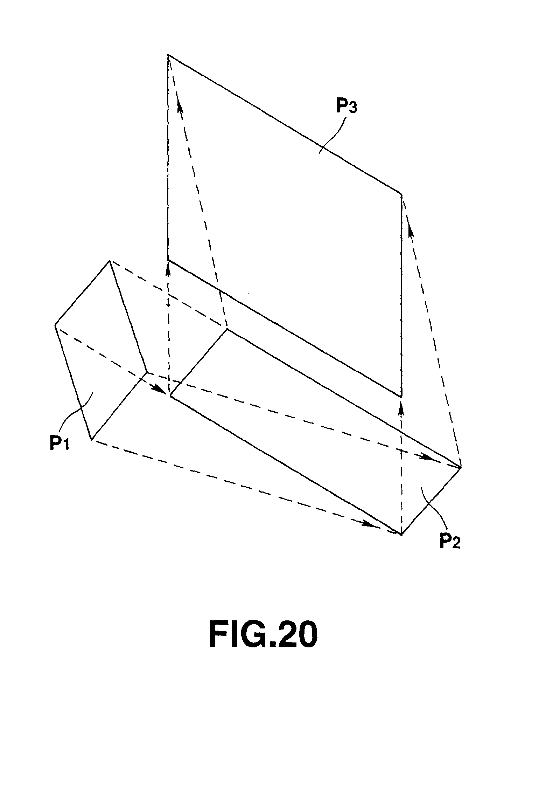

In this manner, in the sixth example, since image light coming from the image display surface of the liquid crystal display panel 1 is enlarged in one predetermined direction and another direction perpendicular to this predetermined direction, an ordinary liquid crystal display panel can be used as the liquid crystal display panel 1. As shown in FIG. 20, when an ordinary liquid crystal display panel is used as the liquid crystal display panel 1, an ordinary image P1 emerging from the image display surface of the liquid crystal display panel 1 is enlarged 2 to 10 times in the predetermined direction to become an image P2. This image P2 is enlarged 2 to 10 times similarly in another direction perpendicular to the above-described predetermined direction to become an image P3. Therefore, the obtained image P3 is a 2x to 10x image of the first ordinary image P1.

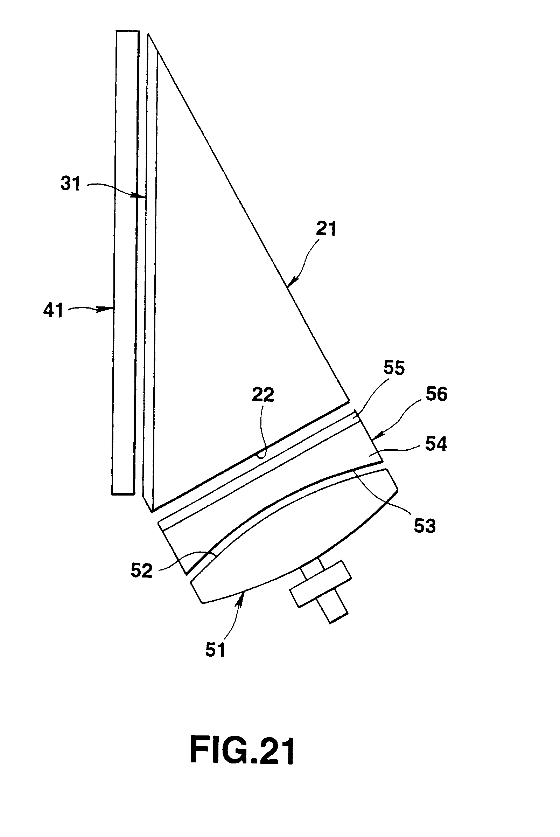

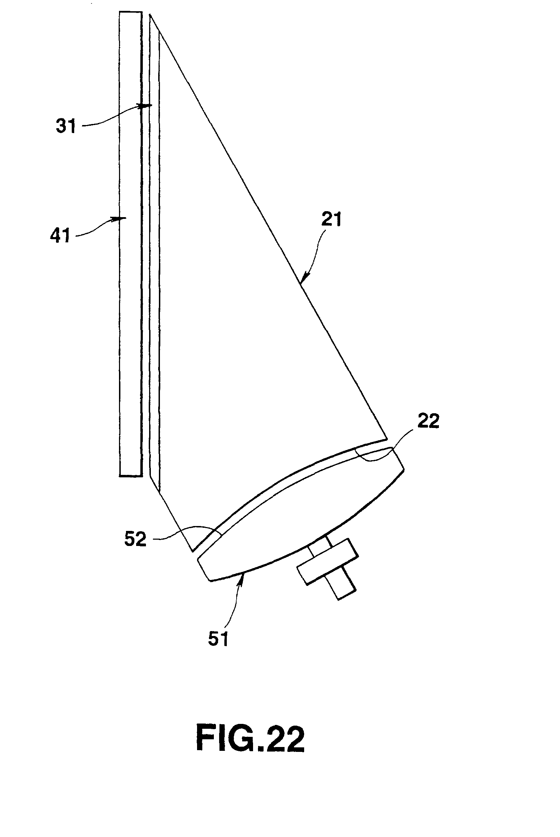

FIG. 21 is a side view showing the main part of a display apparatus according to the seventh example. In this display apparatus, a CRT display 51 is used as a display. In this case, since an image display surface 52 of the CRT display 51 is an arcuated convex surface, a collimating optical guide 56 is arranged above the image display surface 52 in order to collimate the image light emerging from the image display surface 52 into parallel light and sending the parallel image light to be perpendicularly incident on an incident surface 22 of an optical guide 21. The collimating optical guide 56 is obtained by densely forming a large number of small convex lens portions 55 on a transparent member 54. The transparent member 54 has, on its one surface, an incident surface 53 comprising a concave surface arcuated in accordance with the image display surface 52. The small convex lens portions 55 are formed on the other surface of the transparent member 54. The collimating optical guide 56 may not be used, but an arrangement of the ninth embodiment shown in, e.g., FIG. 22, may be employed. More specifically, an incident surface 22 of an optical guide 21 may be a concave surface which is arcuated in accordance with an image display surface 52 of a CRT display 51.

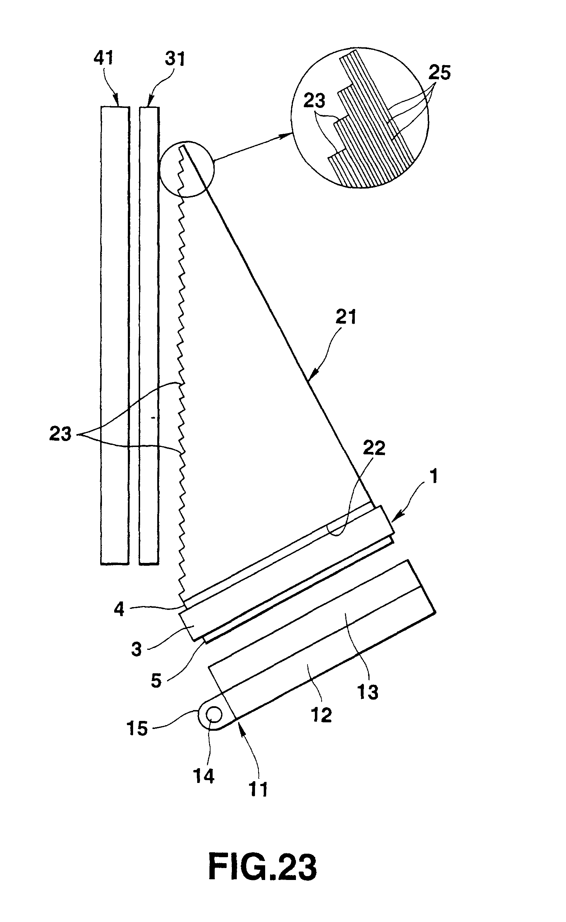

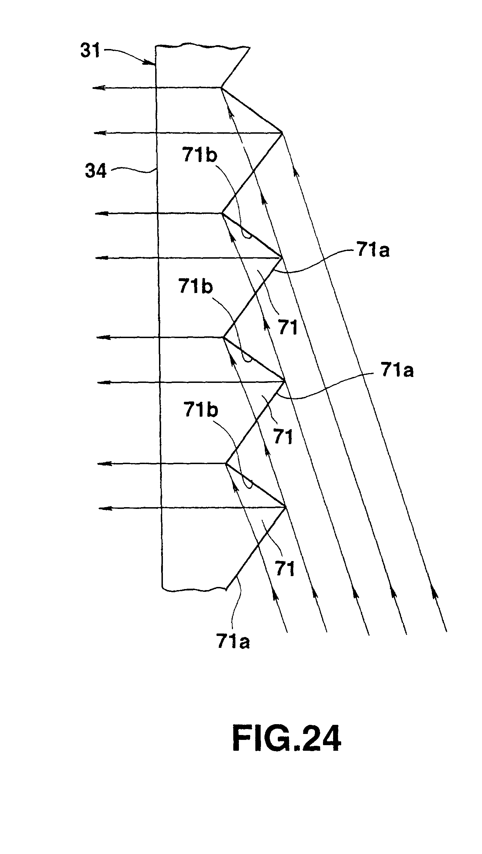

FIG. 23 includes a side view of the main part of a display apparatus according to the nineth example, and an enlarged sectional view of its part. In this display apparatus, exit surfaces 23 of an optical guide 21 are stepwise inclined surfaces. The substantial exit surfaces 23 are parallel to an incident surface 22 of the optical guide 21. A refractor 31 is inserted between the exit surfaces 23 and a diffusion plate 41. According to a method of forming the optical guide 21 of this case, the optical guide 21 identical to that shown in FIG. 1 is formed, and thereafter the exit surface 23 identical to that shown in FIG. 1 is cut stepwise. The pitch of the step portion is preferably as small as possible. For example, according to the above forming method using cutting, if the width of substantial exit surface 23 is about 0.05 m to 0.5 mm, several to several ten cores 25 are arranged within this width. A refractor 31 of this case can be the one as shown in FIG. 7 or 12, or the one as shown in FIG. 24.

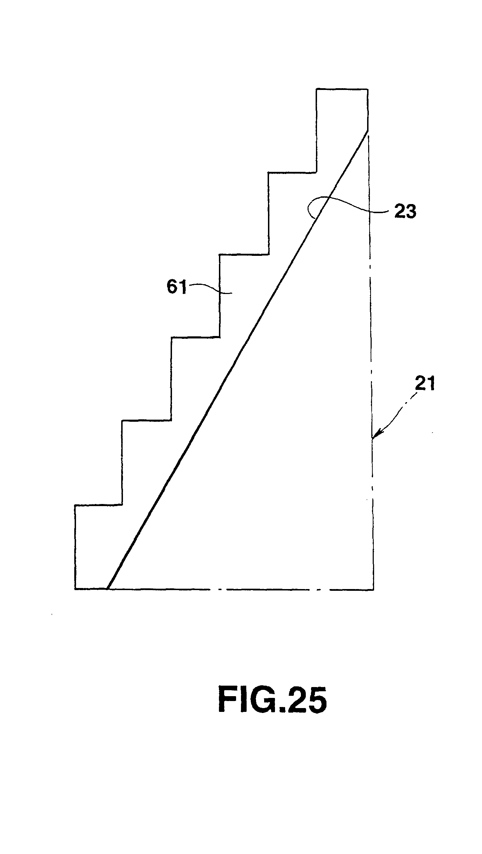

In a refractor 31 shown in FIG. 24, transversely elongated prism portions 71 are formed on the entire portion of one surface of a resin film made of, e.g., polycarbonate, at a very small arrangement pitch of about 50 μm. In this case, as indicated by arrows in FIG. 24, image light propagating straight in cores 25 of an optical guide 21 along the central axes of the cores 25 is incident on incident surfaces 71a comprising the lower surfaces of the prism portions 71 of the refractor 31, and is reflected (refracted) by reflecting surfaces 71b comprising the upper surfaces of the prism portions 71 to become image light perpendicular to an exit surface 34 of the refractor 31, so that it is enlarged in the direction of arrangement of the prism portions 71. According to another method of forming the optical guide 21 of this case, as shown in the tenth example shown in FIG. 25, a sheet member 61, one surface of which is a flat surface and the other surface of which is stepped, may be made of the same material as that of cores 25 of an optical guide 21, or of a material having a refractive index close to that of the cores 25, and the flat surface of the sheet member 61 may be adhered to an exit surface 23 of the optical guide 21 with an adhesive (not shown) made of an acrylic resin.

In the above embodiments and examples, plastic optical fibers are used. However, glass optical fibers obtained by coating cores made of high-refractive index glass with cladding layers made of low-refractive index glass may be used. Also, graded optical fibers may be used in place of the stepped optical fibers as described above. In the above embodiments and examples, a liquid crystal display panel or a CRT display is used as the display. However, an EL display, an LED display, a plasma display, or the like may be used instead.

Industrial Applicability

As has been described above, according to the present invention, since the optical guide has a large number of linear optical guide lines that are arranged densely, when assembling the apparatus, it suffices to incorporate this optical guide, thus facilitating the assembling operation. Since the exit surface of the optical guide is an inclined surface which is inclined with respect to the incident surface, the shape of the side surface of the optical guide can be formed as, e.g., a right-angled triangle. Since the incident surface of the optical guide need only be arranged on the image display surface side of the display, when the exit surface of the optical guide is vertical, the depth of the optical guide can be set to almost equal to the depth of the display, leading to a reduction in size of the entire apparatus.

Additional advantages and modifications will readily occur to those skilled in the art. Therefore, the invention in its broader aspects is not limited to the specific details and representative embodiments, shown and described herein. Accordingly, various modifications may be made without departing from the scope of the general inventive concept as defined by the appended claims.

## Claims

1. An optical image guide system comprising:

   a display (1) having an image display surface (2);

   an optical guide (21) formed of a large number of optical fibers (24) with cores (25) covered with cladding layers (26) and having an incident surface (22) facing the image display surface (2) of the display (1) and a large number of exit surfaces (23),

   an optical refractor (31) having refracting layers (35) and arranged along the exit surfaces (23) of the optical guide (21) for refracting a light emerged therefrom, and

   a screen (41) for displaying the light emerged from the optical refractor (31) so as to be visually observed,
   **characterized in that**

   said display (1) comprises a plurality of pixel electrodes (9), and in that the image light corresponding to one of said pixel electrodes (9) is guided by several adjacent cores (25) of said fiber cores (25).

2. The optical image guide system according to claim 1, wherein said exit surfaces (23) of the optical fibers (24) are arranged stepwise so as to form a common exit surface of the entire optical guide which is inclined with respect to the incident surface (22); wherein each of said exit surfaces (23) is parallel to the incident surface (22), wherein each step of said common exit surface is formed by a plurality of optical fibers (24), and wherein each of the refracting layers (35) of the optical refractor (31) corresponds to one of the exit surfaces (23).

3. The optical image guide system according to claim 1, wherein the optical guide (21) comprises a body having the incident surface and an inclined surface inclined with respect to the incident surface (22), and a sheet (61) having a flat surface facing the inclined surface of the body and the exit surfaces arranged stepwise along the inclined surface.

4. The optical image guide system according to claim 1, wherein the optical refractor (31) comprises a large number of prism portions, each having an inclined surface to refract light emerging from said optical guide.

5. The optical image guide system according to claim 1, wherein the optical refractor (31) is in tight contact with said exit surface of said optical guide.

6. The optical image guide system according to claim 1, wherein the optical refractor (31) comprises a support member and the refracting layers (35) included within the support member.

7. The optical image guide system according to claim 6, wherein each of the refracting layers (35) comprises a first refracting surface (36a) for refracting the light emerged from corresponding one of the exit surfaces (23) to be substantially perpendicular to the screen (41) and a second refracting surface (36b) for refracting the light towards the first refracting surface (36a) of neighboring one of the refracting layers (35).

8. The optical image guide system according to claim 6, wherein said support member consists of a material having a similar refractive index to that of a material substantially constituting said core.

9. The system according to claim 1, wherein said wherein said refracting layer (35) consist of air.

10. The system according to claim 1, wherein said optical refractor (31) is integrally formed with said optical guide (21).

11. The optical image guide system according to claim 1, wherein said screen (41) is formed integrally with said optical refractor.

12. The system according to claim 1, wherein said display (1) is a member selected form the group consisting of a liquid crystal display apparatus, an electroluminescence display apparatus, a plasma display apparatus, a cathode ray tube, and a laser display apparatus.

13. The system according to claim 1, wherein said display (1) is arranged on an optical path of a light-emitting object (11).

14. The system according to claim 1, further comprising:
a plurality of display elements (9) arranged at a predetermined distance thereamong; wherein said images of said display elements (9) incident from said incident surface (22) are displayed on said display surface (2) with a distance thereamong larger than the distance thereamong on said incident surface (22).

15. The system according to claim 14, wherein a ratio of the distance among the images of said display elements (9) on said incident surface (22) to the distance among the images of said display elements (9) on said display surface (2) is substantially 1/cos α, where α is an angle of inclination said display surface (2) makes with said incident surface (22).

16. The system according to claim 14, wherein said optical guide (21) is capable of guiding light incident on said incident surface (22) in a direction substantially perpendicular to said incident surface (22), and wherein said optical refractor (31) is capable of refracting light form said optical guide (21) in a direction substantially perpendicular to said display surface (2).

17. The system according to claim 1, wherein said optical guide (21) comprises a first optical guide (21A) and a second optical guide (21B) and wherein said optical refractor (31) comprises a first refractor (31A) and a second refractor (31B), and wherein said first optical guide (21A) is arranged on said display surface side (2) of said display (1), said first refractor (31A) is arranged on the exit side of said first optical guide (21A), said second optical guide (21B) is arranged on the exit surface side of the first refractor (31A), and said second refractor (31B) is arranged on the exit surface side of said second optical guide (21B).

**Patentansprüche**

1. Optisches Bildleitsystem, das umfasst:

eine Anzeigeeinrichtung (1) mit einer Bildanzeigefläche (2);

eine optische Leiteinrichtung (21), die aus einer großen Anzahl von Lichtleitfasern (24) mit Kernen (25) besteht, die mit Mantelschichten (26) überzogen sind, und eine Auftrefffläche (22) aufweist, die der Bildanzeigefläche (2) der Anzeigeeinrichtung (1) zugewandt ist, sowie eine große Anzahl von Austrittsflächen (23);

einen optischen Refraktor (31) mit brechenden Schichten (35), die an den Austrittsflächen (23) der optischen Leiteinrichtung (21) angeordnet sind, um ein daraus austretendes Licht zu brechen, und

einen Bildschirm (41), der das aus dem optischen Refraktor (31) austretende Licht anzeigt, so dass es visuell wahrgenommen wird, **dadurch gekennzeichnet**, dass:

die Anzeigeeinrichtung (1) eine Vielzahl von Pixelelektroden (9) umfasst, und dadurch, dass das Bildlicht, das einer der Pixelelektroden (9) entspricht, durch mehrere benachbarte Keme (25) der Faserkeme (25) geleitet wird.

2. Optisches Bildleitsystem nach Anspruch 1, wobei die Austrittsflächen (23) der Lichtleitfasern (24) stufenförmig angeordnet sind, so dass sie eine gemeinsame Austrittsfläche der gesamten optischen Leiteinrichtung bilden, die in Bezug auf die Auftrefffläche (22) geneigt ist, wobei jede der Austrittsflächen (23) parallel zu der Auftrefffläche (22) ist, wobei jede Stufe der gemeinsamen Austrittsfläche durch eine Vielzahl von Lichtleitfasern (24) gebildet wird, und wobei jede der brechenden Schichten (35) des optischen Refraktors (31) einer der Austrittsflächen (23) entspricht.

3. Optisches Bildleitsystem nach Anspruch 1, wobei die optische Leiteinrichtung (21) einen Körper mit der Auftrefffläche und einer geneigten Fläche, die in Bezug auf die Auftrefffläche (22) geneigt ist, und eine Platte (61) mit einer planen Fläche umfasst, die der geneigten Fläche des Körpers und den Austrittsflächen zugewandt ist, die stufenförmig an der geneigten Fläche angeordnet sind.

4. Optisches Bildleitsystem nach Anspruch 1, wobei der optische Refraktor (31) eine große Anzahl von Prismenabschnitten umfasst, die jeweils eine geneigte Fläche haben, um aus der optischen Leiteinrichtung austretendes Licht zu brechen.

5. Optisches Bildleitsystem nach Anspruch 1, wobei der optische Refraktor (31) in engem Kontakt mit der Austrittsfläche der optischen Leiteinrichtung ist.

6. Optisches Bildleitsystem nach Anspruch 1, wobei der optische Refraktor (31) ein Trägerelement und die brechenden Schichten (35) umfasst, die in dem Trägerelement enthalten sind.

7. Optisches Bildleitsystem nach Anspruch 6, wobei jede der brechenden Schichten (35) eine erste brechende Fläche (36a) umfasst, die das aus einer entsprechenden der Austrittsflächen (23) austretende Licht bricht, so dass es im Wesentlichen senkrecht zu dem Bildschirm (41) ist, und eine zweite brechende Fläche (36b), die das Licht auf die erste brechende Fläche (36a) einer benachbarten der brechenden Schichten (35) zu bricht.

8. Optisches Bildleitsystem nach Anspruch 6, wobei das Trägerelement aus einem Material besteht, das einen ähnlichen Brechungsindex hat wie ein Material, das im Wesentlichen den Kern bildet.

9. System nach Anspruch 1, wobei die brechende Schicht (35) aus Luft besteht.

10. System nach Anspruch 1, wobei der optische Refraktor (31) integral mit der optischen Leiteinrichtung (21) ausgebildet ist.

11. Optisches Bildleitsystem nach Anspruch 1, wobei der Bildschirm (41) integral mit dem optischen Refraktor ausgebildet ist.

12. System nach Anspruch 1, wobei die Anzeigeeinrichtung (1) ein Element ist, das aus der Gruppe ausgewählt wird, die aus einer Flüssigkristall-Anzeigevorrichtung, einer Elektrolumineszenz-Anzeigevorrichtung, einer Plasmaanzeigevorrichtung, einer Kathodenstrahlröhren- und einer Laseranzeigevorrichtung besteht.

13. System nach Anspruch 1, wobei die Anzeigeeinrichtung (1) auf einem optischen Weg eines lichtemittierenden Objektes (11) angeordnet ist.

14. System nach Anspruch 1, das des Weiteren umfasst:
eine Vielzahl von Anzeigeelementen (9), die in einem vorgegebenen Abstand zueinander angeordnet sind, wobei die Bilder der Anzeigeelemente (9), die von der Auftrefffläche (22) auftreffen, auf der Anzeigefläche (2) mit einem Abstand zueinander angezeigt werden, der größer ist als ihr Abstand zueinander auf der Auftrefffläche (22).

15. System nach Anspruch 14, wobei ein Verhältnis des Abstandes der Bilder der Anzeigeelemente (9) auf der Auftrefffläche (22) zueinander zum Abstand der Bilder der Anzeigeelemente (9) auf der Anzeigefläche (2) zueinander im Wesentlichen $1/\cos \alpha$ beträgt, wobei $\alpha$ ein Neigungswinkel ist, den die Anzeigefläche (2) zu der Auftrefffläche (22) bildet.

16. System nach Anspruch 14, wobei die optische Leiteinrichtung (21) in der Lage ist, auf die Auftrefffläche (22) auftreffendes Licht in einer Richtung im Wesentlichen senkrecht zu der Auftrefffläche (22) zu leiten, und wobei der optische Refraktor (31) in der Lage ist, Licht von der optischen Leiteinrichtung (21) in einer Richtung im Wesentlichen senkrecht zu der Anzeigefläche (2) zu brechen.

17. System nach Anspruch 1, wobei die optische Leiteinrichtung (21) eine erste optische Leiteinrichtung (21A) und eine zweite optische Leiteinrichtung (21B) umfasst, und wobei der optische Refraktor (31) einen ersten Refraktor (31A) und einen zweiten Refraktor (31 B) umfasst, und wobei die erste optische Leiteinrichtung (21A) an der Anzeigeflächenseite (2) der Anzeigeeinrichtung (1) angeordnet ist, der erste Refraktor (31A) an der Austrittsseite der ersten optischen Leiteinrichtung (21A) angeordnet ist, die zweite optische Leiteinrichtung (21B) an der Austrittsflächenseite des ersten Refraktors (31A) angeordnet ist und der zweite Refraktor (31B) an der Austrittsflächenseite der zweiten optischen Leiteinrichtung (21B) angeordnet ist.

## Revendications

1. Système de guide d'image optique comprenant :

   un affichage (1) comportant une surface d'affichage d'image (2) ;
   un guide optique (21) formé par un nombre important de fibres optiques (24) dont des âmes (25) sont recouvertes de couches de gainage (26) et qui comporte une surface d'incidence (22) qui fait face à la surface d'affichage d'image (2) de l'affichage (1) et un nombre important de surfaces de sortie (23) ;
   un réfracteur optique (31) qui comporte des couches de réfraction (35) et qui est agencé le long des surfaces de sortie (23) du guide optique (21) pour réfracter une lumière qui en émerge ; et
   un écran (41) pour afficher la lumière qui émerge depuis le réfracteur optique (31) de telle sorte qu'elle soit observée visuellement,
       caractérisé en ce que :
   ledit affichage (1) comprend une pluralité d'électrodes de pixel (9) et en ce que la lumière d'image correspondant à l'une desdites électrodes de pixel (9) est guidée par plusieurs âmes adjacentes (25) desdites âmes de fibre (25).

2. Système de guide d'image optique selon la revendication 1, dans lequel lesdites surfaces de sortie (23) des fibres optiques (24) sont agencées en marches de manière à former une surface de sortie commune de la totalité du guide optique qui est inclinée par rapport à la surface d'incidence (22) ; dans lequel chacune desdites surfaces de sortie (23) est parallèle à la surface d'incidence (22), dans lequel chaque marche de ladite surface de sortie commune est formée par une pluralité de fibres optiques (24) et dans lequel chacune des couches de réfraction (35) du réfracteur optique (31) correspond à l'une des surfaces de sortie (23).

3. Système de guide d'image optique selon la revendication 1, dans lequel le guide optique (21) comprend un corps comportant la surface d'incidence et une surface inclinée qui est inclinée par rapport à la surface d'incidence (22), et une feuille (61) qui comporte une surface plane qui fait face à la surface inclinée du corps et aux surfaces de sortie agencées en marches le long de la surface inclinée.

4. Système de guide d'image optique selon la revendication 1, dans lequel le réfracteur optique (31) comprend un nombre important de parties de prisme dont chacune comporte une surface inclinée pour réfracter une lumière qui émerge depuis ledit guide optique.

5. Système de guide d'image optique selon la revendication 1, dans lequel le réfracteur optique (31) est en contact intime avec ladite surface de sortie dudit guide optique.

6. Système de guide d'image optique selon la revendication 1, dans lequel le réfracteur optique (31) comprend un élément de support et les couches de réfraction (35) qui sont incluses à l'intérieur de l'élément de support.

7. Système de guide d'image optique selon la revendication 6, dans lequel chacune des couches de réfraction (35) comprend une première surface de réfraction (36a) pour réfracter la lumière qui émerge depuis l'une correspondante des surfaces de sortie (23) de telle sorte qu'elle soit sensiblement perpendiculaire à l'écran (41) et une seconde surface de réfraction (36b) pour réfracter la lumière en direction de la première surface de réfraction (36a) de l'une voisine des couches de réfraction (35).

8. Système de guide d'image optique selon la revendication 6, dans lequel ledit élément de support est constitué par un matériau qui présente un indice de réfraction similaire à celui d'un matériau qui constitue de façon substantielle ladite âme.

9. Système selon la revendication 1, dans lequel ladite couche de réfraction (35) est constituée par de l'air.

10. Système selon la revendication 1, dans lequel ledit réfracteur optique (31) est formé d'un seul tenant avec ledit guide optique (21).

11. Système de guide d'image optique selon la revendication 1, dans lequel ledit écran (41) est formé d'un seul tenant avec ledit réfracteur optique.

12. Système selon la revendication 1, dans lequel ledit affichage (1) est un affichage choisi parmi le groupe comprenant un appareil d'affichage à cristaux liquides, un appareil d'affichage par électroluminescence, un appareil d'affichage plasma, un tube à rayons cathodiques et un appareil d'affichage laser.

13. Système selon la revendication 1, dans lequel ledit affichage (1) est agencé sur un chemin optique d'un objet émetteur de lumière (11).

**14.** Système selon la revendication 1, comprenant en outre :

une pluralité d'éléments d'affichage (9) agencés à une distance prédéterminée les uns des autres, dans lequel lesdites images desdits éléments d'affichage (9) qui arrivent en incidence depuis ladite surface d'incidence (22) sont affichées sur ladite surface d'affichage (2) moyennant une distance qui les sépare supérieure à la distance qui les sépare sur ladite surface d'incidence (22).

**15.** Système selon la revendication 14, dans lequel un rapport de la distance entre les images desdits éléments d'affichage (9) sur ladite surface d'incidence (22) sur la distance entre les images desdits éléments d'affichage (9) sur ladite surface d'affichage (2) vaut sensiblement $1/\cos\alpha$ où $\alpha$ est un angle d'inclinaison que ladite surface d'affichage (2) forme avec ladite surface d'incidence (22).

**16.** Système selon la revendication 14, dans lequel ledit guide optique (21) peut guider une lumière qui arrive en incidence sur ladite surface d'incidence (22) suivant une direction sensiblement perpendiculaire à ladite surface d'incidence (22) et dans lequel ledit réfracteur optique (31) peut réfracter une lumière en provenance dudit guide optique (21) suivant une direction sensiblement perpendiculaire à ladite surface d'affichage (2).

**17.** Système selon la revendication 1, dans lequel ledit guide optique (21) comprend un premier guide optique (21A) et un second guide optique (21B) et dans lequel ledit réfracteur optique (31) comprend un premier réfracteur (31A) et un second réfracteur (31B) et dans lequel ledit premier guide optique (21A) est agencé sur ledit côté de surface d'affichage (2) dudit affichage (1), ledit premier réfracteur (31A) est agencé sur le côté de sortie dudit premier guide optique (21A), ledit second guide optique (21B) est agencé sur le côté de surface de sortie du premier réfracteur (31A) et ledit second réfracteur (31B) est agencé sur le côté de surface de sortie dudit second guide optique (21B).

# FIG.1

FIG.2

25

26

24

## FIG.3

24

27

## FIG.4

**FIG.5**

27

29

# FIG.6A

27

24

# FIG.6B

**FIG.7**

31b

31a

# FIG.8

**FIG.9**

**FIG.10**

IMAGE INPUT ANGLE

# FIG.11

# FIG.12

**FIG.13**

**FIG.14**

**FIG.15**

**FIG.16**

**FIG.17**

**FIG.18**

FIG.19

**FIG.20**

**FIG.21**

**FIG.22**

**FIG.23**

# FIG.24

**FIG.25**